# EUROPEAN PATENT SPECIFICATION

(11) **EP 2 101 382 B1**
(45) Date of publication and mention of the grant of the patent: **09.11.2011**
(21) Application number: 09380042.3
(22) Date of filing: 05.03.2009
(51) Int. Cl.: H02G 3/08

(54) **Box for electrical mechanism adaptor**
Dose für elektrischen Gerätadapter
Boîtier pour adaptateur de mécanisme électrique

(30) Priority: 14.03.2008 ES 200800529 U
(43) Date of publication of application: 16.09.2009
(73) Proprietor: Unex Aparellaje Electrico S.L., 08903 L'Hospitalet de Llobregat (Barcelona) (ES)
(72) Inventor: Salcedo Sunol, Eloi, 08620 Sant Vicenc dels Horts (Barcelona) (ES)
(74) Representative: Curell Aguilà, Marcelino

(56) References cited:
- EP-A1- 1 137 142
- EP-A2- 1 737 093

## Description

### Field of the invention

This invention relates to a box for electrical mechanism adapter which allows electrical mechanisms, such as switches, commutators, plugs, fuses and the like, to be inserted into an electrical facility wherein the electrical conductors are laid inside raceways made up of a base section and a cover section, both made from electrical insulation material. The adapter box to which the invention relates is made up of a quadrangular shaped base plate, which constitutes the actual adapter in which the electrical mechanism is inserted, and a covering box to cover said base plate and the electrical mechanism installed therein, said base plate being provided with attachment means, whereby it can be attached to a wall, and, on the face opposite the face intended to back onto said wall, with engagement means intended to retain the electrical mechanism and the covering box, automatically and independently without external holding means.

### State of the art

Electrical mechanism adapters normally have means for attaching the relevant electrical mechanism therein, means which usually consist of projections that are vertical with respect to the bottom wall of the adapter, which have a blind axial hole in which metallic screws are attached and which traverse holes provided in said mechanisms.

This operation for assembling the electrical mechanisms in said adapters is time-consuming and uneconomical because it requires auxiliary elements such as the metallic attachment screws. Furthermore, including said metallic screws can affect the quality of the insulation in conflictive or extreme environmental conditions.

In an attempt to overcome the drawbacks mentioned in the preceding paragraph, the solution was adopted wherein the actual adapter was to have the means for retaining the electrical mechanisms to be installed inside therein, either by simple snap engagement using elastic retention means, or by positional engagement, using for example a bayonet system. EP 1 137 142 describes such a solution.

According to one aspect of the above solution, an electrical mechanism adapter was developed, made up of a cuadrangular base plate provided with attaching means for backing onto a wall and having, on the face opposite the one backing onto the wall, elastic engagement means for retaining, automatically and independently, without external holding means, an electrical mechanism and a box for covering the set that has seating means for said covering box.

### Disclosure of the invention

Practice has shown that, although it is true that said electrical mechanism adapters perfectly fulfil the purpose for which they were designed, it is also true that the covering boxes, or the lid sections provided for covering the adapter and the mechanism installed therein, are organised in such a way that they are not very reliable with a view to fulfilling their intended security purpose.

An aim of the invention consists in said covering box being really reliable and openable.

This aim is achieved by a box for electrical mechanism adapter of the type indicated at the beginning, **characterized in that** the covering box is made up of a parallelepipedic, hollow body that is longer than the side of the base plate and which is open on one of its larger sides, while the other larger side is partially closed except for an opening that is offset towards one end of said larger side and which takes up a little more than half the surface of the latter, with said opening extending inside along its four sides in a prismatic skirting, so that a free space is delimited between the innermost section of said skirting and the smaller side of said parallelpipedic, hollow body that stretches around the full width of said body and is opposite said innermost section of the skirting.

Preferably, said engagement means provided in the base plate comprise four engagement plates that project from said base plate perpendicular thereto and which are in a central position on each side of a virtual, inner square that is smaller than said base plate and is centred therein.

Preferably, said covering box skirting has a rigid flange on each of its bottom edges, with each rigid flange corresponding with one of said engagement plates provided on the base plate.

Preferably, said engagement means provided on the base plate comprise elastic engagement means, for retaining said covering box, which consist of four pairs of hooked teeth arranged in pairs on the edges of each pair of opposite sides of said base plate, flanking the four apices of said base plate and pointing towards the outside thereof.

Preferably, each of the middle faces of said parallelepipedic, hollow body constituting the covering box has, in the inside thereof, longitudinal, projecting flanges that correspond with said hooked teeth on the base plate for the closure between said covering box and said base plate.

Preferably, said free space in the covering box forms a cavity, offset with respect to said opening, for passing and housing wires, with said cavity being delimited by the innermost section of said skirting, by the two end parts of the middle faces of said parallelepipedic, hollow body and by the smaller face of said body which is further away from said opening, said cavity being provided, on said end parts of the middle faces, with weakened areas that fracture appropriately to allow openings to be made to pass raceways containing electrical conductors.

Preferably, on the edges of said base plate support means are provided that support a rectangular separation plate intended to separate electrical conductors, with said rectangular separation plate dividing the space in said cavity into two subspaces parallel to the seating plane of said parallelepipedic, hollow body constituting the covering box.

Preferably, said rectangular separation plate has positioning appendices on one of its longitudinal edges, that are engageable with said support means arranged on the base plate.

Preferably, said rectangular separation plate has, an engagement tooth, opposite said positioning appendices, for engaging in an engagement groove on the lid section of a raceway for laying electrical conductors.

Preferably, said rectangular separation plate has longitudinal and transversal grooving, which defines a plurality of parts in said rectangular separation plate that are separable to allow electrical conductors to pass therethrough.

Preferably, said rectangular separation plate has cantilever fingers projecting from each end of said rectangular separation plate, with said cantilever fingers having at the ends thereof rectangular notches orientated so that the ones at one end can engage with the ones at the other opposite end of another rectangular separation plate installed in a juxtaposed covering box.

Preferably, on each side of the base plate that coincides with the middle faces of said parallelepipedic, hollow body constituting said covering box, a seating step is arranged for a stepped part shaped to complement the shape of said seating step and which is arranged on the bottom edge of said middle face.

Preferably, the larger side of the parallelepipedic, hollow body constituting the covering box has a slight, flat, seating shoulder that is interrupted, at two apices of said larger, open side and in two points on the middle faces of said parallelpipedic, hollow body, by angled notches that correspond with guiding and support pillars arranged on the apices of the base plate.

### Brief description of the drawings

In order to facilitate the understanding of the preceding ideas, a description is provided below of a preferred embodiment of the box for electrical mechanism adapter that constitutes the object of the invention, with reference to the drawings accompanying the non-limiting description, wherein:
Fig. 1 is a top perspective view, along the active side, of a base plate made according to the object of the invention.
Fig. 2 is a top plan view of the base plate in the preceding figure.
Figs. 3, 4 and 5 are, respectively, a top perspective view along the visible side, a top plan view and a bottom plan view, of a covering box which, according to the invention, can be attached to the base plate of Figs. 1 and 2.
Fig. 6 is a top plan view of the covering box attached to the base plate.
Fig. 7 is a longitudinal section along the line VII - VII of Fig. 6, showing the set obtained by attaching the covering lid to the base plate, shown respectively in Figs. 1 and 2 and in Figs. 3 to 5.
Fig. 8 is a section along the line Vlll- VIII in Fig. 6, corresponding to a detail of the attachment of the covering box to the base plate.
Fig. 9 is a perspective and partially sectioned view, of a detail of the position of the rectangular separation plate with respect to the base plate and the covering box.
Fig. 10 is a top perspective view of a possible embodiment of a rectangular separation plate that divides the free space inside the covering box defined by the prismatic skirting, into two subspaces parallel to the seating plane of the larger open wall.
Figs. 11, 12, 13 and 14 show the rectangular separation plate, respectively in a bottom plan view, an elevation view corresponding to the side opposite the one on which the base plate is held, a side elevation view and a top plan view.

### Detailed description of an embodiment of the invention

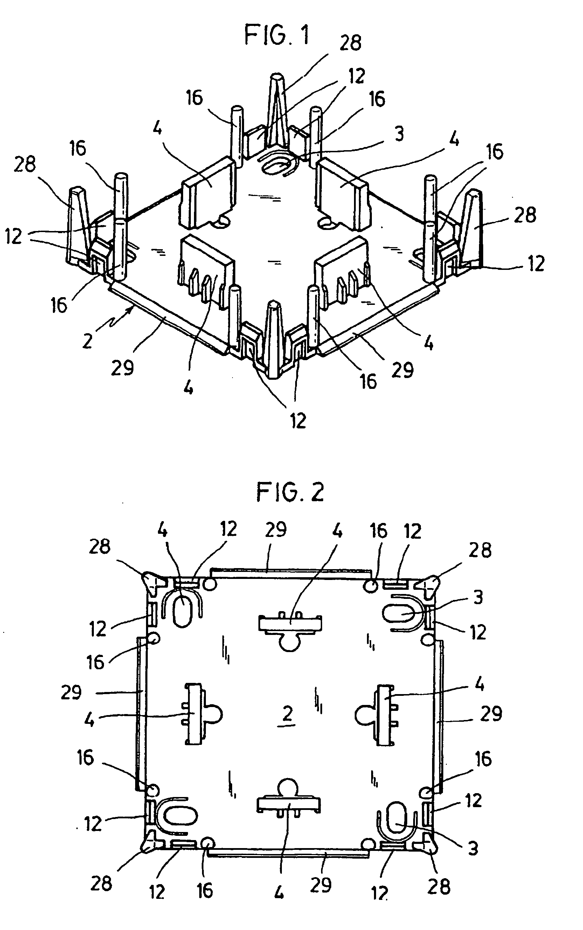

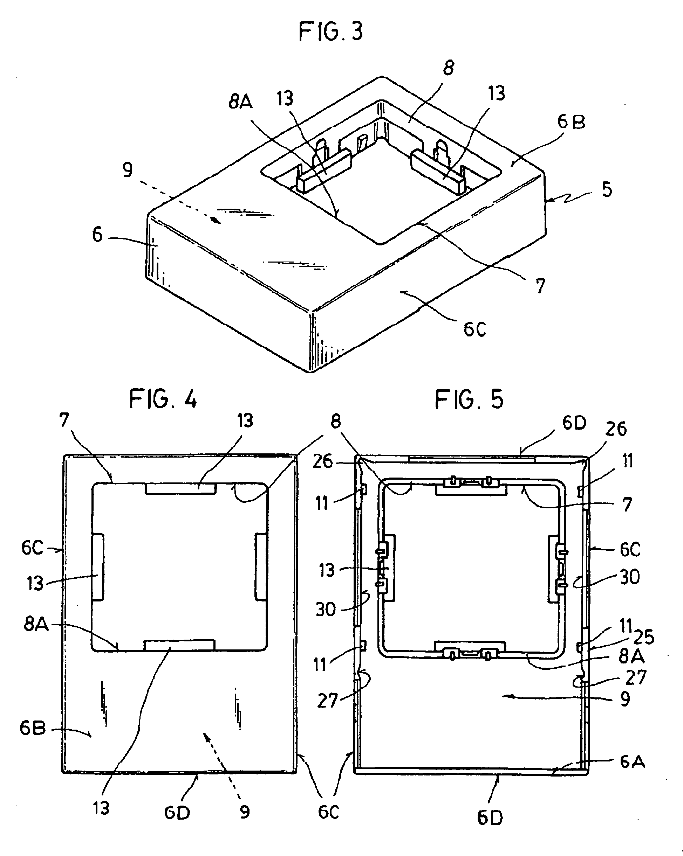

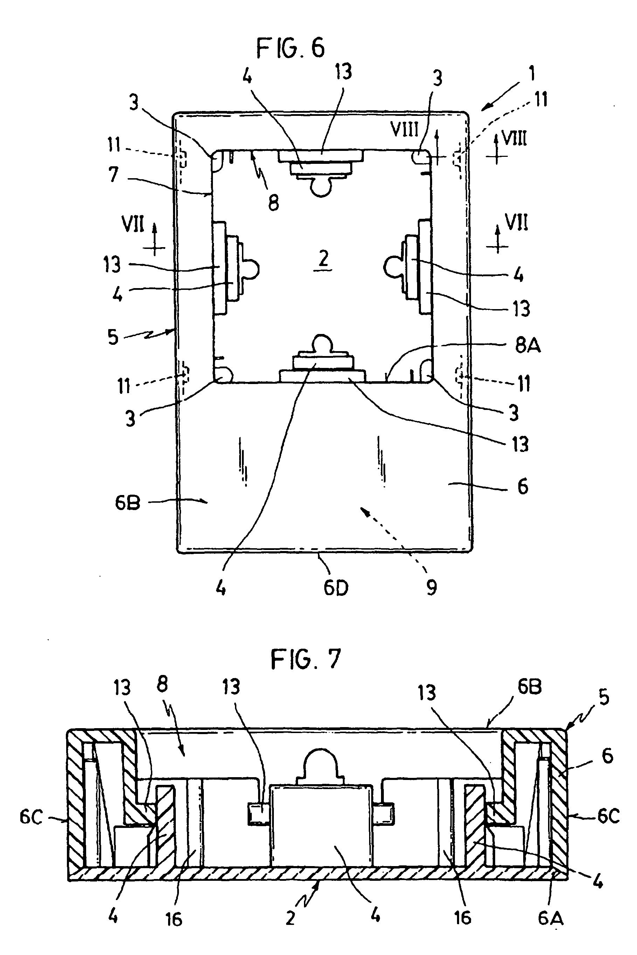

The box 1 for electrical mechanism adapters that is the object of the invention, shown as a whole in Fig. 6, is made up of a cuadrangular base plate 2 which in this example is square, as shown in Figs. 1 and 2, which has attachment means 3 that allow it to be attached to a wall, and has engagement plates 4 for retaining automatically and independently, without external holding means, an electrical mechanism (not shown) and elastic engagement means 12 for retaining the covering box 5 that covers the set, shown in Figs. 3 to 5.

Figs. 3 to 6 show that covering box 5 is made up of a parallelepipedic, hollow body 6 which, being longer than the side of the square base plate 2, is open on one of its larger sides 6A, while its other larger side 6B is partially closed except for an opening 7 that forms a square window which, taking up a little more than half the surface of said larger face 6B, extends inwards on its four sides in a prismatic skirting 8, so that a free space is delimited that forms a cavity 9 for passing and containing electrical conductors juxtaposed with respect to innermost section 8A of said prismatic skirting 8, between said innermost section 8A and smaller face 6D of parallelepipedic, hollow body 6 which is opposite said innermost section 8A and for the full width of parallelepipedic, hollow body 6.

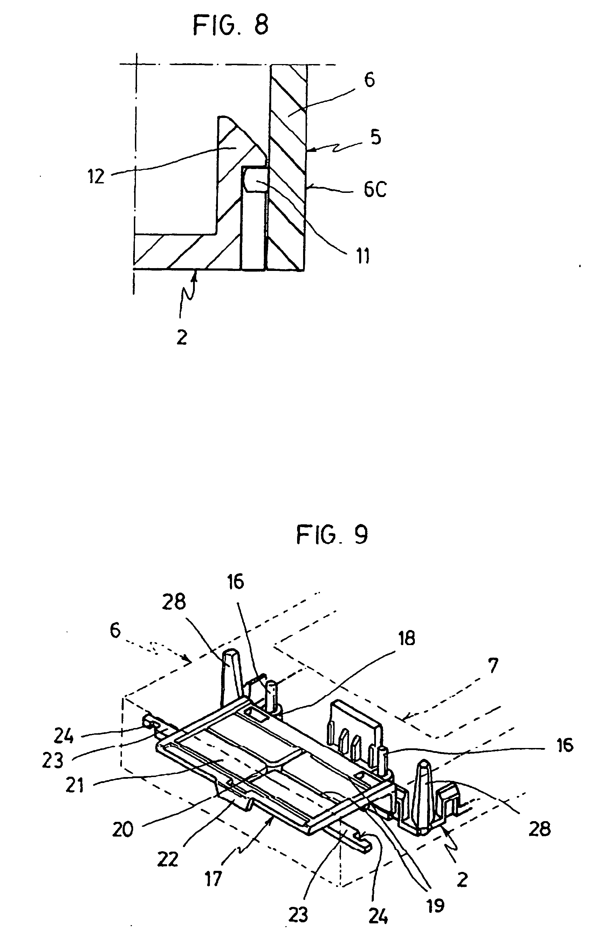

Figs. 1 and 2 show the elastic engagement means 12 arranged in the actual base plate 2 for seating covering box 5, said elastic engagement means consisting of four pairs of hooked teeth 12 that project perpendicular to base plate 2 and are arranged so that each hooked tooth 12 flanks one of the four apices of base plate 2 and is orientated towards the outside of base plate 2 in correspondence with covering box 5, particularly in correspondence with the side middle walls 6C of parallelepipedic, hollow body 6, as shown in Figs. 6 and 8.

Figs. 1 and 2 also illustrate the position of engagement plates 4 on base plate 2, which are centred on each side of an internally centred virtual square that is smaller than said base plate 2.

Figs. 3, 4 and 5 show that prismatic skirting 8 of covering box 5 has in the centre, on each bottom edge, a rigid flange 13 which, as shown in Fig. 7, corresponds respectively, with one of the four engagement plates 4 arranged on base plate 2.

Fig. 5 shows, and Fig. 6 indicates with a dotted line, that inside each middle face 6C of parallelepipedic, hollow body 6 that forms covering box 5, a pair of longitudinal, projecting flanges 11 are provided, which in terms of their position, correspond with elastic engagement means 12 in the form of hooked teeth arranged on base plate 2 for closing covering box 5 on said base plate 2.

As indicated, and as shown in Fig. 5, covering box 5 forms cavity 9 for passing and containing electrical conductors, which is offset with respect to square window 7 and is delimited by inner section 8A of skirting 8, by the two end parts of middle faces 6C of parallelepipedic, hollow body 6 and by smaller face 6D thereof, which is the furthese away from said square window 7, said cavity 9 being provided, on said end parts of middle faces 6C, with weakened areas that fracture appropriately to allow openings to be made to pass raceways containing electrical conductors.

Figs. 1, 2 and 9 show that base plate 2 has, on the edge of the side that coincides with cavity 9, supporting means 16 for a rectangular separation plate 17 for electrical conductors, which subdivides the space in cavity 9 into two subspaces parallel to the seating plane of parallelepipedic, hollow body 6 of covering box 5.

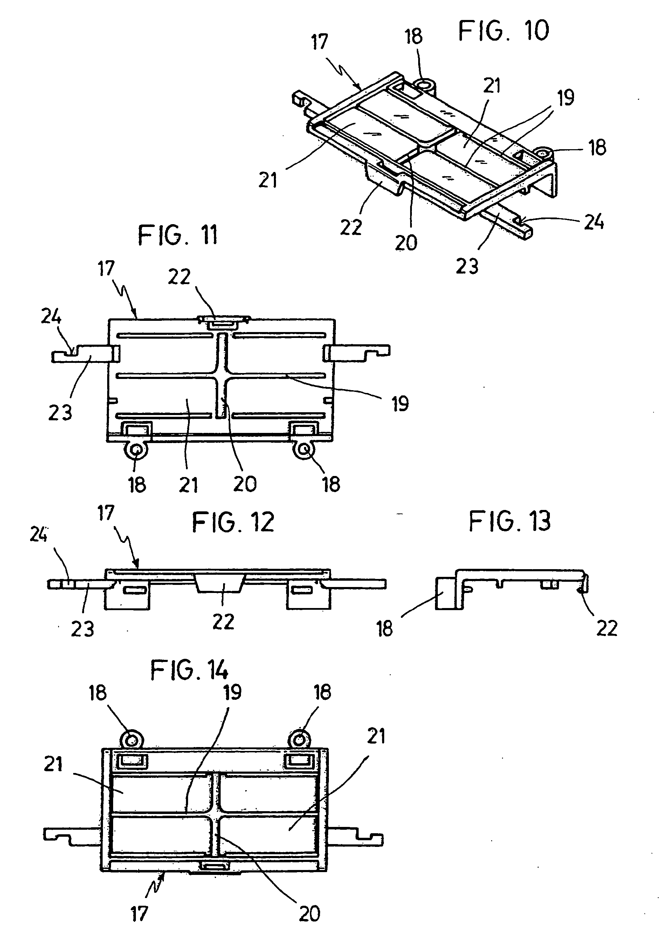

Rectangular separation plate 17 shown in Fig. 9, is shown in detail in Figs. 10 to 14, wherein it is observed that rectangular separation plate 17 has on one of its longitudinal edges positioning appendices 18 that are engageable with supporting means 16 arranged on base plate 2. It can also be seen that rectangular separation plate 17 has longitudinal 19 and transversal 20 grooving, which defines a plurality of parts 21 thereof, that are separable to allow electrical conductors to pass therethrough. Also, it can be seen that rectangular separation plate 17 has, opposite positioning appendices 18, an engagement tooth 22 for engaging in the conventional engagement groove of the lid of a moulded raceway for laying electrical conductors. Finally, it can also be seen that rectangular separation plate 17 has cantilever fingers 23 that project from each end of said rectangular separation plate 17 and which have at the ends thereof rectangular notches 24 that are orientated so that the ones at one end can engage with those at the other opposite end of another rectangular separation plate 17 installed in a juxtaposed covering box 5.

Fig. 5 shows that the larger open face 6A of covering box 5 has a slight flat seating shoulder 25 that is interrupted in the two appendices 26 and in two points 27 of middle faces 6C, forming angled notches that correspond to guiding and support pillars 28 arranged on the apices of base plate 2.

Figs. 1, 2, 5 and 7 show that, on each side of base plate 2 that in the overall closing position coincides with middle faces 6C of parallelepipedic, hollow body 6, there is a seating step 29 for a stepped part 30, shaped to complement said seating step 29, that is arranged on the bottom edge of said middle faces 6C.

## Claims

1. Box for electrical mechanism adapter that allows electrical mechanisms to be inserted into an electrical facility wherein the electrical conductors are laid inside raceways made up of a base section and a cover section, both made from electrical insulation material, said adapter box (1) being made up of a cuadrangular base plate (2), which constitutes the actual adapter wherein the electrical mechanism is installed, and a covering box (5) for covering said base plate (2) and the electrical mechanism installed therein, said base plate (2) being provided with attachment means (3), that enable it to be attached to a wall, and, on the face opposite the face intended to back onto said wall, with engagement means (4, 12) for retaining automatically and independently, without external holding elements, said electrical mechanism and said covering box (5), **characterized in that** said covering box (5) is made up of a parallelepipedic, hollow body (6) that is longer than the side of said base plate (2) and open on one (6A) of its larger faces, while the other (6B) of its larger faces is partially closed except for an opening (7) that is offset towards one end of said larger face (6B) and which takes up a little more than half the surface thereof, said opening (7) extending inside on its four sides in a prismatic skirting (8), so that a free space (9) is delimited between innermost section (8A) of said skirting (8) and the smaller face (6D) of said parallelepipedic, hollow body (6) that extends around the full width of said body and is opposite said innermost section (8A) of skirting (8).

2. Box for electrical mechanism adapter according to claim 1, **characterized in that** said engagement means arranged on base plate (2) comprise four engagement plates (4) that project from said base plate (2) perpendicular thereto and which are positioned centrally on each side of a virtual, inner square that is smaller than said base plate (2) and centred thereon.

3. Box for electrical mechanism adapter according to claim 2, **characterized in that** said skirting (8) of covering box (5) has, on each bottom edge, a rigid flange (13), each of said rigid flanges (13) being arranged to correspond with one of said engagement plates (4) arranged on base plate (2).

4. Box for electrical mechanism adapter according to any of the claims 1 to 3, **characterized in that** said engagement means arranged on base plate (2) comprise elastical engagement means, for retaining said covering box (5), which are made up of four pairs of hooked teeth (12) arranged in pairs on the edges of each pair of opposite sides of said base plate (2), flanking the four apices of said base plate (2) and orientated towards the outside thereof.

5. Box for electrical mechanism adapter according to claim 4, **characterized in that** each middle face (6C) of said parallelepipedic, hollow body (6) that constitutes covering box (5) has on the inside thereof longitudinal, projecting flanges (11) that correspond with said hooked teeth (12) of base plate (2) for the closure between said covering box (5) and said base plate (2).

6. Box for electrical mechanism adapter according to any of the claims 1 to 5, **characterized in that** said free space in covering box (5) forms a cavity (9), offset with respect to said opening (7), for passing and housing wires, said cavity (9) being delimited by innermost section (8A) of said skirting (6), by the two end portions of the middle faces (6C) of said parallelepipedic, hollow body (6) and by smaller face (6D) of said body that is further away from said opening (7), said cavity (9) being provided, on said end parts of middle faces (6C), with weakened areas that fracture appropriately to allow openings to be made to pass raceways containing electrical conductors.

7. Box for electrical mechanism adapter according to claim 6, **characterized in that** on the edges of said base plate (2) support means (16) are provided that support a rectangular separation plate (17) intended to separate electrical conductors, said rectangular separation plate (17) dividing the space of said cavity (9) into two subspaces parallel to the seating plane of said parallelepipedic, hollow body (6) that constitutes covering box (5).

8. Box for electrical mechanism adapter according to claim 7, **characterized in that** said rectangular separation plate (17) has on one of its longitudinal edges positioning appendices (18) that are engageable with said supporting means (16) arranged on base plate (2).

9. Box for electrical mechanism adapter according to claim 8, **characterized in that** said rectangular separation plate (17) has, opposite said positioning appendices (18), an engagement tooth (22) for engaging in a attachment groove of the lid section of a raceway for laying electrical conductors.

10. Box for electrical mechanism adapter according to any of the claims 7 to 9, **characterized in that** said rectangular separation plate (17) has longitudinal (19) and transversal (20) groovings, which define a plurality of parts (21) of said rectangular separation plate (17) that are separable to allow the passage of electrical conductors.

11. Box for electrical mechanism adapter according to any of the claims 7 to 10, **characterized in that** said rectangular separation plate (17) has cantilever fingers (23) that project from each end of said rectangular separation plate (17), with said cantilever fingers (23) having at the ends thereof rectangular notches (24) that are orientated so that those at one end can engage with the ones at the other opposite end of another rectangular separation plate (17) installed on a juxtaposed covering box (5).

12. Box for electrical mechanism adapter according to any of the claims 1 to 11, **characterized in that** on each side of said base plate (2) that coincides with middle faces(6C) of said parallelepipedic, hollow body (6) that constitutes covering box (5), there is a seating step (29) for a stepped part (30) shaped to complement said seating step (29) and which is arranged on the bottom edge of said middle face (6C).

13. Box for electrical mechanism adapter according to any of the claims 1 to 12, **characterized in that** said open larger side (6A) of parallelepipedic, hollow body (6) that constitutes covering box (5) has a slightly flat seating shoulder (25) that is interrupted, in two appendices of said larger open face (6A) and in two points on middle faces (6C) of said parallelepipedic, hollow body (6), by angled notches (26, 27) that correspond with guiding and support pillars (28) arranged on the apices of base plate (2).

## Patentansprüche

1. Box für einen elektrischen Geräteadapter, die das Einfügen elektrischer Geräte in eine elektrische Einrichtung ermöglicht, in der die elektrischen Leiter in Laufbahnen verlegt sind, die aus einem Bodenabschnitt und einem Abdeckabschnitt bestehen, die beide aus elektrischem Isoliermaterial sind,
wobei die Adapterbox (1) aus einer rechteckigen Bodenplatte (2), die den eigentlichen Adapter darstellt, in dem das elektrische Gerät installiert ist, und einer Abdeckbox (5) zum Abdecken der Bodenplatte (2) und des darin installierten elektrischen Geräts zusammengesetzt ist,
wobei die Bodenplatte (2) mit Befestigungsmitteh, die ihre Befestigung (3) an einer Wand ermöglichen, und an der Fläche, die der an der Wand anzulegenden Fläche gegenüber liegt, mit Eingriffsmitteln (4, 12) versehen ist, um das elektrische Gerät und die Abdeckbox (5) ohne externe Halteelemente automatisch und unabhängig zu halten,
**dadurch gekennzeichnet, dass**
die Abdeckbox (5) aus einem quaderförmigen Hohlkörper (6) besteht, der länger als die Seite der Grundplatte (2) und an einer (6A) seiner größeren Flächen offen ist, während die andere (6B) seiner größeren Flächen teilweise geschlossen ist mit Ausnahme einer zu einem Ende der größeren Fläche (6B) hin verschobenen Öffnung (7), die etwas mehr als die Hälfte von deren Fläche einnimmt, wobei die Öffnung (7) an ihren vier Seiten mit einer prismatischen Einfassung (8) nach innen verläuft, so dass zwischen dem innersten Abschnitt (8A) der Einfassung (8) und der um die volle Breite des Körpers verlaufenden und dem innersten Abschnitt (8A) der Einfassung (8) gegenüber liegenden kleineren Fläche (6D) des quaderförmigen Hohlkörpers (6) ein Freiraum (9) begrenzt ist.

2. Box für einen elektrischen Geräteadapter nach Anspruch 1, **dadurch gekennzeichnet, dass** die auf der Grundplatte (2) angeordneten Eingriffsmittel vier Eingriffsplatten (4) enthalten, die auf der Grundplatte (2) senkrecht stehen und an jeder Seite eines virtuellen Innenquadrats, das kleiner als die Grundplatte (2) und darauf zentriert ist, mittig platziert sind.

3. Box für einen elektrischen Geräteadapter nach Anspruch 2, **dadurch gekennzeichnet, dass** die Einfassung (8) der Abdeckbox (5) an jeder Bodenkante einen starren Flansch (13) aufweist, der so angeordnet ist, dass er mit jeweils einer der auf der Grundplatte (2) angeordneten Eingriffsplatten (4) übereinstimmt.

4. Box für einen elektrischen Geräteadapter nach einem der Ansprüche 1 bis 3, **dadurch gekennzeichnet, dass** die an der Grundplatte (2) angeordneten Eingriffsmittel zum Halten der Abdeckbox (5) elastische Eingriffsmittel aufweisen, die aus vier Paaren hakenförmiger Zähne (12) bestehen, die paarweise an den Kanten jedes Paares von gegenüberliegenden Seiten der Grundplatte (2) angeordnet sind, die vier Spitzen der Grundplatte (2) flankieren und von ihr nach außen gerichtet sind.

5. Box für einen elektrischen Geräteadapter nach Anspruch 4, **dadurch gekennzeichnet, dass** jede mittlere Fläche (6C) des die Abdeckbox (5) bilden den quaderförmigen Hohlkörpers (6) an deren Innenseite längliche vorspringende Flansche (11) aufweist, die den hakenförmigen Zähnen (12) der Grundplatte (2) entsprechen, um die Grundplatte (2) mit der Abdeckbox (5) zu verschließen.

6. Box für einen elektrischen Geräteadapter nach einem der Ansprüche 1 bis 5, **dadurch gekennzeichnet, dass** der Freiraum in der Abdeckbox (5) zum Hindurchführen und Aufnehmen von Kabeln einen bezüglich der Öffnung (7) verschobenen Hohlraum (9) bildet, der durch den innersten Abschnitt (8A) der Einfassung (6), die zwei Endabschnitte der mittleren Flächen (6C) des quaderförmigen Hohlkörpers (6) und durch die von der Öffnung (7) weiter entfernte kleinere Fläche (6D) des Körpers begrenzt ist, wobei der Hohlraum (9) an den Endabschnitten der mittleren Flächen (6C) mit geschwächten Bereichen vorgesehen ist, die in geeigneter Weise so brechen, dass Öffnungen zum Durchführen von elektrische Leiter enthaltenden Laufbahnen entstehen.

7. Box für einen elektrischen Geräteadapter nach Anspruch 6, **dadurch gekennzeichnet, dass** an den Kanten der Grundplatte (2) Unterstützungsmittel (16) vorgesehen sind, die eine zum Trennen elektrischer Leiter bestimmte rechteckige Trennplatte (17) tragen, wobei diese den Raum des Hohlraums (9) in zwei zur Aufnahmeebene des die Abdeckbox (5) bildenden quaderförmigen Hohlkörpers (6) parallele Teilräume unterteile.

8. Box für einen elektrischen Geräteadapter nach Anspruch 7, **dadurch gekennzeichnet, dass** die rechteckige Trennplatte (17) an einer ihrer Längskanten Positionieransätze (18) zum Eingriff in die auf der Grundplatte (2) angeordneten Unterstützungsmittel (16) aufweist.

9. Box für einen elektrischen Geräteadapter nach Anspruch 8, **dadurch gekennzeichnet, dass** die rechteckige Trennplatte (17) gegenüber den Positionieransätzen (18) einen Eingriffszahn (22) zum Eingriff in eine Befestigungsnut des Deckelabschnitts einer zum Verlegen elektrischer Leiter vorgesehenen Laufbahn aufweist.

10. Box für einen elektrischen Geräteadapter nach einem der Ansprüche 7 bis 9, **dadurch gekennzeichnet, dass** die rechteckige Trennplatte (17) Längs- (19) und Quernuten (20) aufweist, die mehrere trennbare Abschnitte (21) der rechteckigen Trennplatte (17) definieren, um die Durchführung von elektrischen Leitern zu ermöglichen.

11. Box für einen elektrischen Geräteadapter nach einem der Ansprüche 7 bis 10, **dadurch gekennzeichnet, dass** die rechteckige Trennplatte (17) auskragende Finger (23) aufweist, die an jedem Ende der rechteckigen Trennplatte (17) herausragen und an ihren Enden rechteckige Kerben (24) aufweisen, die so ausgerichtet sind, dass die Finger an einem Ende in die am entgegengesetzten Ende einer weiteren, auf einer benachbarten Abdeckbox (5) angebrachten rechteckigen Trennplatte (17) eingreifen können.

12. Box für einen elektrischen Geräteadapter nach einem der Ansprüche 1 bis 11, **dadurch gekennzeichnet, dass** es an jeder Seite der Grundplatte (2), die mit mittleren Flächen (6C) des die Abdeckbox (5) bildenden quaderförmigen Hohlkörpers (6) übereinstimmt, eine Auflagestufe (29) für einen an der Bodenkante der mittleren Fläche (6C) angeordneten gestuften Abschnitt (30) gibt, der so geformt ist, dass er die Auflagestufe (29) ergänzt.

13. Box für einen elektrischen Geräteadapter nach einem der Ansprüche 1 bis 12, **dadurch gekennzeichnet, dass** die offene größere Seite (6A) des die Abdeckbox (5) bildenden quaderförmigen Hohlkörpers (6) eine leicht flache Aufnahmeschulter (25) aufweist, die an zwei Ansätzen der großen offenen Fläche (6A) und an zwei Stehen auf den mittleren Flächen (6C) des quaderförmigen Hohlkörpers (6) durch gewinkelte Kerben (26, 27) unterbrochen ist, die an den Spitzen der Grundplatte (2) angeordneten Führungs- und Tragsäulen (28) entsprechen.

## Revendications

1. Boîtier pour adaptateur de mécanisme électrique qui permet d'insérer des mécanismes électriques dans une installation électrique dans laquelle les conducteurs électriques sont posés à l'intérieur de chemins de câbles constitués par une section de base et une section de couvercle, toutes deux réalisées à partir d'un matériau isolant électrique, ledit boîtier d'adaptateur (1) étant constitué par une plaque de base quadrangulaire (2), laquelle constitue l'adaptateur effectif dans lequel le mécanisme électrique est installé, et un boîtier de couverture (5) pour couvrir ladite plaque de base (2) et le mécanisme électrique installé à l'intérieur, ladite plaque de base (2) étant munie de moyen de fixation (3), qui lui permettent d'être fixée à une paroi et, sur la face opposée à la face destinée donner sur l'arrière de ladite paroi, avec des moyens d'engagement (4, 12) pour retenir automatiquement et indépendamment, sans éléments de maintien externes, ledit mécanisme électrique et ledit boîtier de couverture (5), **caractérisé en ce que** ledit boîtier de couverture (5) est constitué par un corps creux parallélépipède (6) qui est plus long que le côté de ladite plaque de base (2) et ouvert sur une (6A) de ses faces plus grandes, alors que l'autre (6B) de ses faces plus grandes est partiellement fermée à l'exception d'une ouverture (7) qui est décalée vers une extrémité de ladite face plus grande (6B) et qui occupe un peu plus de la moitié de la surface de celle-ci, ladite ouverture (7) s'étendant vers l'intérieur sur ses quatre côtés en un socle prismatique (8), de manière qu'un espace libre (9) soit délimité entre la section la plus interne (8A) dudit socle (8) et la face plus petite (6D) dudit corps creux parallélépipède (6) qui s'étend autour de toute la largeur dudit corps et est opposée à ladite section la plus interne (8A) dudit socle (8).

2. Boîtier pour adaptateur de mécanisme électrique selon la revendication 1, **caractérisé en ce que** lesdits moyens d'engagement disposés sur la plaque de base (2) comprennent quatre plaques d'engagement (4) qui font saillie de ladite plaque de base (2) perpendiculairement à celle-ci et qui sont positionnées centralement sur chaque côté d'un carré intérieur virtuel qui est plus petit que ladite plaque de base (2) et centré sur celle-ci.

3. Boîtier pour adaptateur de mécanisme électrique selon la revendication 2, **caractérisé en ce que** ledit socle (8) du boîtier de couverture (5) comporte, sur chaque bord inférieur, une bride rigide (13), chacune desdites brides rigides (13) étant agencée pour correspondre à une desdites plaques d'engagement (4) disposées sur la plaque de base (2).

4. Boîtier pour adaptateur de mécanisme électrique selon l'une quelconque des revendications 1 à 3, **caractérisé en ce que** lesdits moyens d'engagement disposés sur la plaque de base (2) comprennent des moyens d'engagement élastique, pour retenir ledit boîtier de couverture (5), lesquels sont constitués de quatre paires de dents à crochet (12) agencées par paires sur les bords de chaque paire de côtés opposés de ladite plaque de base (2), encadrant les quatre sommets de ladite plaque de base (2) et orientées vers l'extérieur de celle-ci.

5. Boîtier pour adaptateur de mécanisme électrique selon la revendication 4, **caractérisé en ce que** chaque face centrale (6C) dudit corps creux parallélépipède (6) qui constitue le boîtier de couverture (5) comporte sur l'intérieur de celui-ci des brides longitudinales en saillie (11) qui correspondent auxdites dents à crochet (12) de la plaque de base (2) pour la fermeture entre ledit boîtier de couverture (5) et ladite plaque de base (2).

6. Boîtier pour adaptateur de mécanisme électrique selon l'une quelconque des revendications 1 à 5, **caractérisé en ce que** ledit espace libre dans le boîtier de couverture (5) forme une cavité (9), décalée par rapport à ladite ouverture (7), pour faire passer et loger des fils, ladite cavité (9) étant délimitée par une section la plus interne (8A) dudit socle (6), par les deux portions d'extrémité des faces centrales (6C) dudit corps creux parallélépipède (6) et par une face plus petite (6D) dudit corps qui est ultérieurement éloignée de ladite ouverture (7), ladite cavité (9) étant pourvue, sur lesdites parties d'extrémité de faces centrales (6C), de zones affaiblies qui se fracturent de manière adéquate pour permettre de réaliser des ouvertures pour faire passer des chemins de câbles contenant des conducteurs électriques.

7. Boîtier pour adaptateur de mécanisme électrique selon la revendication 6, **caractérisé en ce que**, sur les bords de ladite plaque de base (2) sont prédisposés des moyens de support (16) qui supportent une plaque de séparation rectangulaire (17) destinée à séparer des conducteurs électriques, ladite plaque de séparation rectangulaire (17) divisant l'espace de ladite cavité (9) en deux sous-espaces parallèles au plan d'assise dudit corps creux parallélépipède (6) qui constitue le boîtier de couverture (5).

8. Boîtier pour adaptateur de mécanisme électrique selon la revendication 7, **caractérisé en ce que** ladite plaque de séparation rectangulaire (17) a sur un de ses bords longitudinaux des appendices de positionnement (18) qui sont engageables avec lesdits moyens de support (16) disposés sur la plaque de base (2).

9. Boîtier pour adaptateur de mécanisme électrique selon la revendication 8, **caractérisé en ce que** ladite plaque de séparation rectangulaire (17) a, à l'opposé desdits appendices de positionnement (18), une dent d'engagement (22) pour l'engagement dans une rainure de fixation de la section de couvercle d'un chemin de câbles pour la pose de conducteurs électriques.

10. Boîtier pour adaptateur de mécanisme électrique selon l'une quelconque des revendications 7 à 9, **caractérisé en ce que** ladite plaque de séparation rectangulaire (17) comporte des rainurages longitudinaux (19) et transversaux (20) qui définissent une pluralité de parties (21) de ladite plaque de séparation rectangulaire (17) qui sont séparables pour permettre le passage des conducteurs électriques.

11. Boîtier pour adaptateur de mécanisme électrique selon l'une quelconque des revendications 7 à 10, **caractérisé en ce que** ladite plaque de séparation rectangulaire (17) a des doigts en porte-à-faux (23) qui font saillie de chaque extrémité de ladite plaque de séparation rectangulaire (17), avec lesdits doigts en porte-à-faux (23) qui ont à leurs extrémités des encoches rectangulaires (24) qui sont orientées de manière que celles à une extrémité puissent s'engager avec celles à l'autre extrémité opposée d'une autre plaque de séparation rectangulaire (17) installée sur un boîtier de couverture (5) juxtaposé.

12. Boîtier pour adaptateur de mécanisme électrique selon l'une quelconque des revendications 1 à 11, **caractérisé en ce que**, sur chaque côté de ladite plaque de base (2) qui correspond aux faces centrales (6C) dudit corps creux parallélépipède (6) qui constitue le boîtier de couverture (5), il est prédisposé un échelon de réception (29) pour une partie à échelon (30) profilée pour correspondre audit échelon de réception (29) et qui est disposée sur le bord inférieur de ladite face centrale (6C).

13. Boîtier pour adaptateur de mécanisme électrique selon l'une quelconque des revendications 1 à 12, **caractérisé en ce que** ledit côté plus grand ouvert (6A) du corps creux parallélépipède (6) qui constitue le boîtier de couverture (5) comporte un épaulement de réception légèrement plat (25) qui est interrompu, dans deux appendices de ladite face ouverte plus grande (6A) et en deux points sur les faces centrales (6C) dudit corps creux parallélépipède (6), par des encoches inclinées (26, 27) qui correspondent à des colonnettes de guidage et de support (28) disposées sur les sommets de la plaque de base (2).
